# EUROPEAN PATENT APPLICATION

(11) **EP 0 989 501 A2**
(43) Date of publication of application: **29.03.2000**
(21) Application number: 99307487.1
(22) Date of filing: 22.09.1999
(51) Int. Cl.: G06F 17/30, G06F 17/60, H04L 29/06

(54) **Method and apparatus for collaboration support**

(30) Priority: 24.09.1998 JP 27008698
(71) Applicant: International Business Machines Corporation, Armonk, NY 10504 (US)
(72) Inventor: Yoshida, Yoichi, Winchester, Hampshire SO21 2JN (GB); Kanatake, Mitsugu, Winchester, Hampshire SO21 2JN (GB); Takahashi, Koichi, Winchester, Hampshire SO21 2JN (GB)
(74) Representative: Davies, Simon Robert

(57) **Abstract**

A server offers a centralized service with respect to a dialog between a plurality of browsers and a Web server, thereby changing the content of service offered to the browsers without changing the server. To accomplish this, in a domain name server 130, a plurality of virtual host names and their common IP address are managed. When a Web browser 100 sends a request by specifying this virtual host name, a server having the common IP address is rendered to offer the centralized service. For a request that does not require any service, this request is transferred to actual Web servers 151 to 157 corresponding to the virtual host name.

## Description

This invention relates to supporting collaboration, for example between information terminals connected to a server via a network in a centralized manner.

The Internet comprises multiple interconnected computer networks so that any computer on a given network can communicate with one or more computers on any other given network. A gateway computer is a computer that interconnects two networks and passes data from one network to the other(s).

All the computers on the Internet communicate through certain communication protocols, i.e., Internet Protocol (IP). Most applications use Transmission Control Protocol (TCP) along with the Internet Protocol. Therefore, the Internet is also referred to as a TCP/IP Network. Any computer connected to the Internet is identified by a unique Internet address.

The Internet uses a well known packet switching technique to route information. On the Internet, the data is transferred through packets (also called IP packets) with an address. Some common Internet applications include Electronic Mail, FTP, Telnet and Network news among others. Internet communication protocols and applications are well known.

The World Wide Web (i.e., WWW or Web) is an information service system that is based on the Internet. The WWW uses Hypertext and client/server technology.

Hypertext is a method of organizing and presenting information such that any data object in a hypertext file can have links to other hypertext files or data objects. For example, while viewing a hypertext page, a user can select a word that has links. This may bring the user to another hypertext file that contains more text and pictures explaining this word (the new file may also have more links to other hypertext files and so forth).

Currently, the hypertext file is organized using a Hyper Text Markup Language (HTML). A hypertext data object can be almost any information media such as text, image, sound, movie or even a piece of an executable computer program. Any hypertext file on the Web is uniquely identified by its Universal Resource Locator (URL).

The Web client or a client (commonly a computer executing a program called a browser) is essentially a hypertext reader that communicates with a Web server through certain data transfer protocols, such as a Hyper Text Transfer Protocol (HTTP). The client can request a hypertext file with its URL and displays the file on a Graphical User Interface (GUI). This display is called a Web page. The client can also pass certain data back to the server and can invoke Common Gateway Interface (CGI) programs on the server computer to conduct certain tasks. Known popular browsers are Netscape Navigator" (trademark of Netscape Communications Corp.) and "Internet Explorer" (trademark of Microsoft Corp.).

Using the worldwide connections of the Internet, the WWW allows a user, being anywhere on the Internet, to post any hypertext file on the WWW and fetch any hypertext file from all over the world as conveniently as using a local hard disk. This gives the user a tremendous power to acquire information and also turns the Internet into a hypermedia global database, i.e., the information superhighway.

The Internet and the WWW have been growing explosively over the past few years. Businesses have also seen the great potential of using the Internet and WWW as the new generation of world-wide communication infrastructure to approach a massive consumer market.

Given such Internet technology, there has been proposed a collaboration technique for allowing a plurality of users to simultaneously conduct a collaboration (browsing, moving and/or modifying) of an HTML page, as disclosed in Japanese Patent Publication 10-124461. Fig. 9 is a diagram showing an example where such a collaboration using an HTML page is applied to an interactive banking system. With this technique, while a customer is viewing a page, a bank agent is enabled to refer to the same page and manipulate it.

However, since there exist certain HTML pages (e.g., stock information pages, other pages including movies and the like) the contents of which vary from time to time, it has been required to synchronize such HTML data that is acquired by a plurality of members participating in a collaboration session. To this end, it has been required to introduce a collaboration server for handling an HTML request sent from one member of the participants in such a way that content of its response is cached and then distributed to another member of the participants. However, since such a collaboration server is capable of supporting only one domain (Web server) alone, great investment costs have been required to introduce such a collaboration technique.

On the other hand, it has been desired to change the content of a response, which is associated with a request sent from a browser to a Web server, without applying any changes to the Web server's side.

Accordingly, the present invention provides an information processing server for supporting a collaboration session between a customer browser and an agent browser, comprising:
(a) means for determining whether or not unique identifier information is contained in a first HTTP request from a browser and, if not, for generating such unique identifier information to be granted to said browser;
(b) means for generating an HTTP response containing said unique identifier information and for sending said HTTP response to said browser; and
(c) a destination Web server management system for transferring a second HTTP request to another Web server corresponding to a host name contained in said second HTTP request sent from said browser.

In a preferred embodiment the server further comprises an agent management table for managing the unique identifier information for a customer browser and the unique identifier information for an agent browser having a collaboration relation with said customer browser.

It is also preferred that the server further comprises means for determining whether or not said second HTTP request contains information specifying an application, wherein if the request does contain such information the relevant application is executed, and if not, the request is passed to the destination Web server management system.

In the preferred embodiment the destination Web server management system further comprises means for determining the communication method to be used in transferring said request to said another Web server.

The invention also provides a method for supporting at a server a collaboration session between a customer browser and an agent browser, comprising:
(a) determining whether or not unique identifier information is contained in a first HTTP request to the server from a browser and, if not, for generating such unique identifier information to be granted to said browser;
(b) means for generating an HTTP response containing said unique identifier information and for sending said HTTP response from the server to said browser; and
(c) transferring a second HTTP request to another Web server corresponding to a host name contained in said second HTTP request sent from said browser.

The above method step will benefit from the same preferred features as described above in relation to the apparatus of the invention, and will typically be implemented by executing appropriate computer program code. Such computer code is often supplied on a computer storage medium, and is also covered by the present invention.

The approach described herein provides a system that is capable of supporting or controlling information terminals in a centralized manner at a lower cost (in terms of a reduced number of resources required for supporting information terminals), yet is not dependent on which particular platforms of information terminals are to be supported or controlled thereby. Further, the content of service offered or provided to information terminals can be controlled without applying any changes to a server that responds to requests from the information terminals.

In one preferred embodiment, a plurality of virtual host names and their common IP address are managed in a domain name server. When a Web browser sends a request by specifying this virtual host name, a server having the common IP address is rendered to offer centralized service. For a request that does not require any service, this request is transferred to an actual Web server corresponding to the virtual host name. In this way, there is provided a server for offering centralized service with respect to a dialog between a plurality of browsers and a Web server, thereby to change if necessary the content of service offered to the browsers without changing the server.

According to another aspect of this invention, there is provided an information processing method to be carried out in a system including a collaboration server for supporting a collaboration between a customer browser and an agent browser, comprising the steps of:
(a) generating, at said collaboration server, a first UAI to be granted to a first agent browser in response to a first HTTP request from the said first agent browser;
(b) sending a first HTTP response containing said first UAI to said first agent browser;
(c) storing said first UAI into an agent management table:
(d) generating, at said collaboration server, a second UAI to be granted to a first customer browser in response to a second HTTP request from the said first customer browser;
(e) sending a second HTTP response containing said second UAI to said first customer browser;
(f) storing said second UAI into said agent management table in association with said first UAI;
(g) receiving a third HTTP request sent from said first customer browser, the said third HTTP request containing first host specifying information;
(h) transferring said third HTTP request to a first Web server corresponding to said first host specifying information;
(i) generating, at said collaboration server, a third UAI to be granted to a second agent browser in response to a fourth HTTP request from the said second agent browser;
(j) sending a third HTTP response containing said third UAI to said second agent browser;
(k) storing said third UAI into said agent management table;
(l) generating, at said collaboration server, a fourth UAI to be granted to a second customer browser in response to a fifth HTTP request from the said second customer browser;
(m) sending a fourth HTTP response containing said fourth UAI to said second customer browser;
(n) storing said fourth UAI into said agent management table in association with said third UAI;
(o) receiving a sixth HTTP request sent from said second customer browser, the said sixth HTTP request containing second host specifying information; and
(p) transferring said sixth HTTP request to a second Web server corresponding to said second host specifying information.

According to another aspect of this invention, there is provided an information processing method to be carried out in a system including a server for receiving a request from an information terminal and for providing service corresponding to the request, comprising the steps of:
(a) receiving, at a first server, a first request from a first information terminal;
(b) executing, at said first server, a first application to grant first information terminal identifying information to said first information terminal;
(c) receiving a second request from said first information terminal, the said second request containing first host specifying information;
(d) transferring said second request to a second server corresponding to said first host specifying information;
(e) receiving, at said first server, a third request from a second information terminal;
(f) executing, at said first server, said first application to grant second information terminal identifying information to said second information terminal;
(g) receiving a fourth request from said second information terminal, the said fourth request containing second host specifying information; and
(h) transferring said fourth request to a third server corresponding to said second host specifying information.
Note here that, in the claims of the present specification, the expression "information terminal identifying information" represents a concept covering information, such as UAI to be described below in connection with an embodiment, which is required for specifying an information terminal or software loaded thereto.

According to another aspect of this invention, there is provided an information processing method to be carried out in a system including a server for receiving a request from an information terminal and for providing service corresponding to the request, comprising the steps of:
(a) sending, from the information terminal, a request containing first host specifying information and application specifying information to a first server corresponding to the said first host specifying information;
(b) checking, at said first server, whether or not said request contains the application specifying information;
(c) if it is determined that said request contains the application specifying information, then executing an application corresponding to the application specifying information; and
(d) if it is determined that said request does not contain the application specifying information, then transferring said request to a second server corresponding to said first host specifying information.

(Note here that the expression "application specifying information" represents a concept covering information, such as a URL or information of a local directory which is required for specifying an application to be executed).

According to another aspect of this invention, there is provided an information processing method to be carried out in a system including a server for receiving a request from an information terminal and for providing service corresponding to the request, comprising the steps of:
(a) sending, from the information terminal, a request containing first host specifying information to a first server corresponding to the said first host specifying information;
(b) checking whether or not communication method specifying information corresponding to said first host specifying information contained in said request is stored at said first server; and
(c) if the communication method specifying information corresponding to said first host specifying information contained in said request is stored at said first server, then transferring said request to a second server corresponding to said first host specifying information in a manner based on said communication method specifying information.

According to another aspect of this invention, there is provided an information processing apparatus for supporting a collaboration between a customer browser and an agent browser, comprising:
(a) a UAI generator for determining whether or not UAI information is contained in a first HTTP request from a browser and, if not, for generating a UAI to be granted to the said browser;
(b) an application for generating an HTTP response containing said UAI and for sending the said HTTP response to said browser;
(c) an agent management table for managing said UAI and another UAI that has a collaboration relation with said UAI; and
(d) a destination Web servers' management table being referred to for transferring a second HTTP request to another Web server corresponding to a host name contained in said second HTTP request sent from said browser.

According to another aspect of this invention, there is provided an information processing apparatus for receiving a request from an information terminal and for generating a response corresponding to the request, comprising:
(a) an information terminal identifying information generator, being responsive to a request from the information terminal, for generating information terminal identifying information; and
(b) a destination Web servers' management table being referred to for transferring said request to another Web server corresponding to host specifying information contained in said request sent from said information terminal.

According to another aspect of this invention, there is provided a storage medium for storing an information processing program to be executed in a system including a server for receiving a request from an information terminal and for providing service corresponding to the request, the program comprising:
(a) program code for directing a first server to receive a first request from a first information terminal;
(b) program code for directing said first server to execute a first application to grant first information terminal identifying information to said first information terminal;
(c) program code for directing said first server to receive a second request from said first information terminal, the said second request containing first host specifying information;
(d) program code for directing said first server to transfer said request to a second server corresponding to said first host specifying information;
(e) program code for directing said first server to receive a third request from a second information terminal;
(f) program code for directing said first server to execute said first application to grant second information terminal identifying information to said second information terminal;
(g) program code for directing said first server to receive a fourth request from said second information terminal, the said fourth request containing second host specifying information;
   and
(h) program code for directing said first server to transfer said request to a third server corresponding to said second host specifying information.

A preferred embodiment of the invention will now be described in detail by way of example only with reference to the following drawings:
Fig. 1 is a conceptual diagram of a communications network with Web clients and servers;
Fig. 2 is a block diagram showing an embodiment of a hardware configuration of a collaboration server (information terminal supporting server) or an information terminal;
Fig. 3 is a block diagram of processing elements in the collaboration server in a preferred embodiment of the invention;
Fig. 4 is a conceptual diagram of an agent management table in the server of Fig. 3;
Fig. 5 is a conceptual diagram of a destination Web servers' management table in the server of Fig. 3;
Fig. 6 is a conceptual diagram of an HTTP response header in a preferred embodiment of the invention;
Fig. 7 is a conceptual diagram of an HTTP request header in a preferred embodiment of the invention;
Fig. 8 is a conceptual diagram of a cache management table in the server of Fig. 3; and

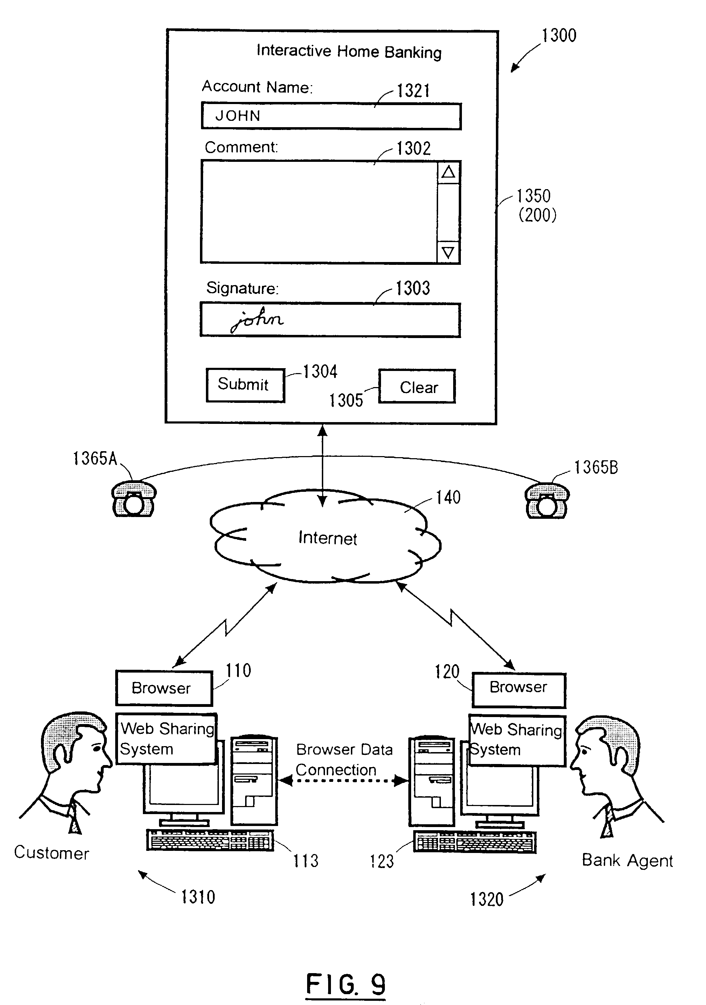

Fig. 9 is a conceptual diagram illustrating a conventional collaboration technique.

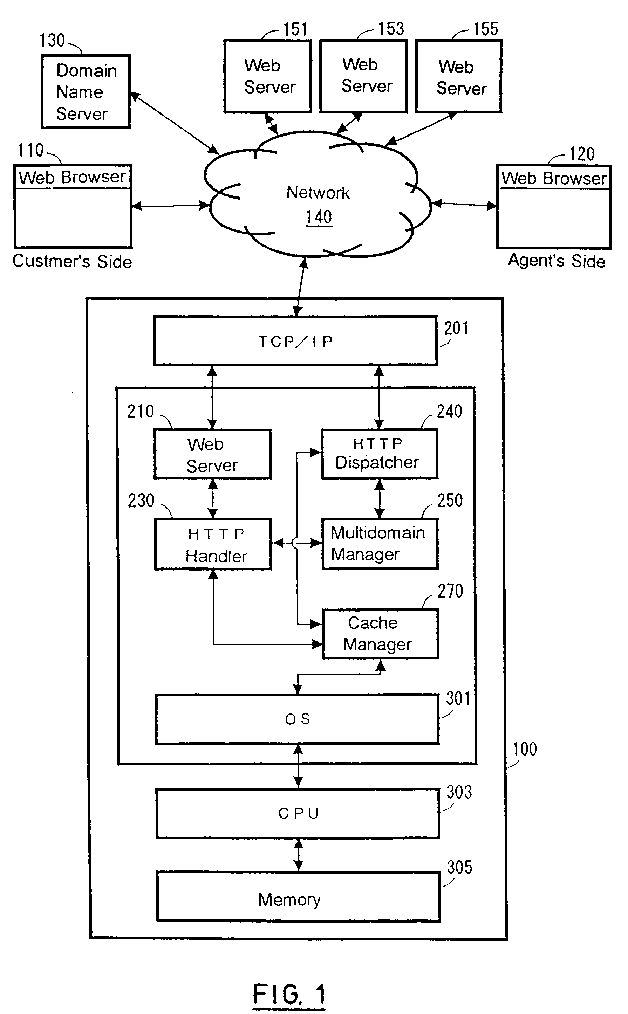

Fig. 1 is a conceptual diagram of a computer system in a preferred embodiment of this invention. In an information terminal 110, a Web browser such as Netscape Navigator and/or Internet Explorer is installed. The information terminal 110 is able to access Web servers 151 to 155 via a network 140 for acquiring a variety of information. In a preferred embodiment, an information terminal supporting server 100 is provided as a "collaboration server". This collaboration server 100 associates the information terminal 110 on a customer's side with an information terminal 120 on an agent's side, and controls both of the associated information terminals such that the same data is sent to their browsers respectively.

### B. Hardware Configuration

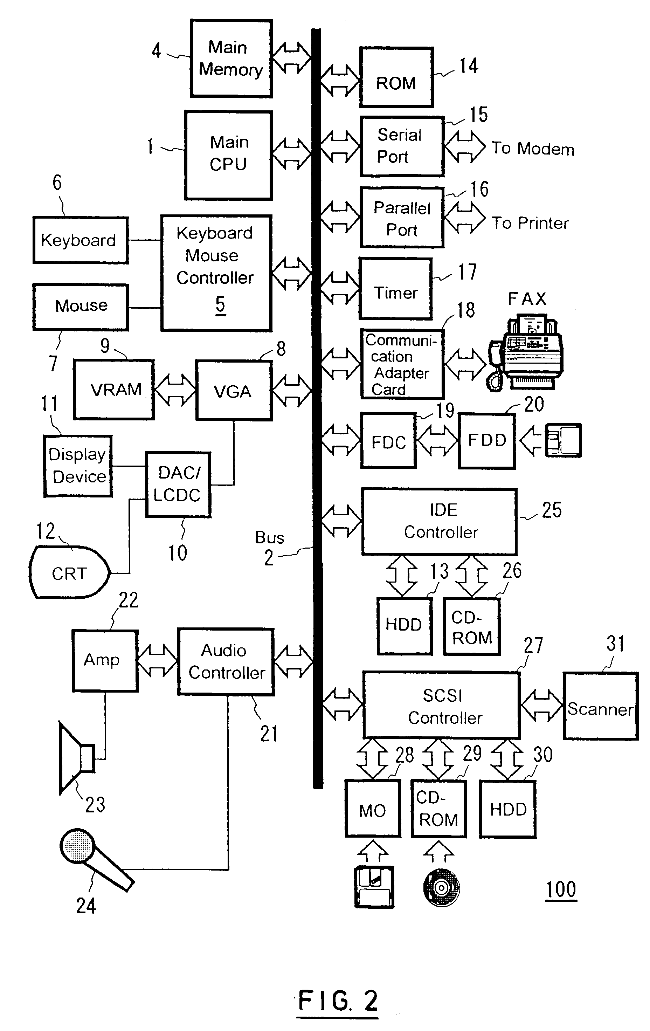

With reference to Fig. 2, there is schematically shown a hardware configuration for implementing the collaboration server 100. The collaboration server 100 includes a central processing unit (CPU) 1 and a memory 4. CPU 1 and memory 4 are connected to a hard disk drive 13 as an auxiliary storage device via a bus 2. A floppy disk drive 20 (or another storage medium drive such as an MO drive 28 or CD-ROM drives 26, 29) is connected to bus 2 via a floppy disk controller 19 (or another controller such as an IDE controller 25 or a SCSI controller 27).

A floppy disk (or other storage medium such as an MO disk or a CD-ROM) inserted into the floppy disk drive 20 (or appropriate other storage medium drive such as the MO drive or CD-ROM drive), the hard disk drive 13 and/or a ROM 14 are capable of storing a computer program code for practicing the method described herein. At the time of execution, this computer program code is loaded into the memory 4 such that it cooperates with an operating system to provide instructions to the CPU or the like. This computer program code may be compressed or divided into a plurality of segments for storing across a plurality of media.

Also, the collaboration server 100 may be provided with user interface hardware, including a pointing device 7 (such as a mouse, a joystick or the like) and a keyboard 6 for inputting, as well as a display 12 for presenting visual data to a user. In addition, a touch panel may be used as an input means. Also, a printer and a modem may be connected via a parallel port 16 and a serial port 15 respectively. The present server 100 may be connected to a network via the serial port 15 and the modem or a communication adapter 18 (Ethernet or token ring card) for communicating with other computers and the like.

A speaker 43 receives audio signals that are D/A (digital/analog) converted by an audio controller 21 via an amplifier 22, and outputs the audio signals as sounds. Also, the audio controller 21 may perform an A/D (analog/digital) conversion of audio information received from a microphone 24, thereby to capture the external audio information into the system.

Thus, it will be readily understood from the foregoing that the collaboration server 100 may be implemented for example by a conventional personal computer (PC), a workstation, a notebook PC, a palm top PC, a communication terminal having communication functions including a network computer or the like, and any combinations thereof. The information terminal 110 may be implemented by the hardware configuration as shown in Fig. 2 in the same manner as the collaboration server 100. However, since the information terminal 110 requires only limited functions for entering information acquisition requests and originating the same, it will be readily understood by those skilled in the art that the information terminal 110 may also be implemented by a variety of household electric appliances such as TV sets incorporating computers, a game machine having communication functions, an information terminal having communication functions including a telephone, a FAX machine, a mobile telephone, a PHS (personal handyphone system), an electronic memorandum book or the like, and any combinations thereof.

It will be appreciated that the skilled person will be aware of many variations with regard to the hardware configuration shown in Figure 2, which is exemplary only, and includes many items which are only optional in relation to the present invention, such as audio controller 21, amplifier 22, speaker 23, microphone 24, keyboard 6, mouse 7, keyboard/mouse controller 5, CRT 12, display device 11, VRAM 9 and VGA 8, storage medium controllers 19, 25, 27, and the like. Furthermore, the functions of the collaboration server 100 may be implemented by combining a plurality of machines and distributing implemented functions among these machines.

It will be appreciated that the collaboration server and information server may run any suitable operating system, such as "Windows95" (trademark of Microsoft Corp.), "AIX" (trademark of IBM Corp.) or the like; one possibility is to use a real-time or embedded OS, such as "OS/Open" (trademark of IBM Corp.).

### C. System Configuration

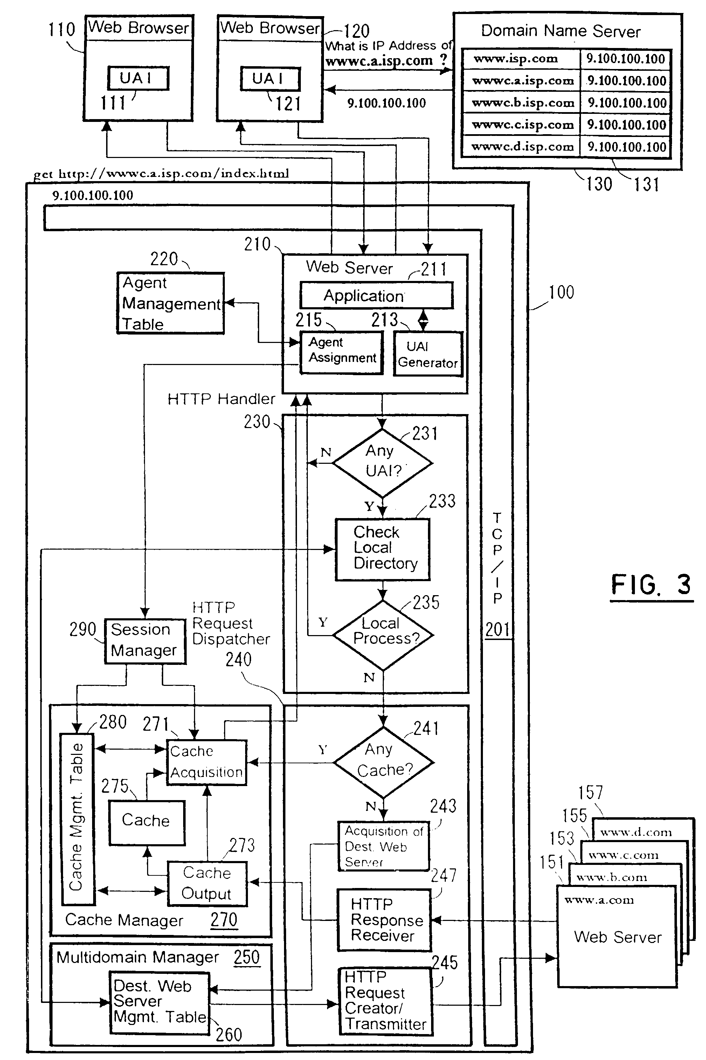

Fig. 3 is a functional block diagram, which shows a system configuration of a collaboration system including the collaboration server 100 in a preferred embodiment.

The collaboration system in a preferred embodiment includes the information terminals 110, 120, a domain name server 130, the collaboration server 100, as well as Web servers 151, 153 and 157.

In a preferred embodiment, the information terminals 110, 120 are provided with Web browsers. Each of the Web browsers specifies a URL and sends a request toward a given Web server. It also receives responses sent from the Web servers 210, 151 to 155 and displays them on a display screen.

The domain name server 130 manages an association (correspondence) table of host names in a domain and IP addresses. Each of the Web servers 151 to 155 responds to a request sent by one of the Web browsers for sending an HTML content of the specified URL back to the Web browser's side.

The collaboration server 100 in a preferred embodiment is provided with the Web server 210, an HTTP handler 230, an HTTP request dispatcher 240, a multidomain manager 250, a cache manager 270 and a session manager 290.

The Web server on the collaboration server's side (collaboration Web server) 210 responds to a request sent by a Web browser for sending an HTML file of the specified URL back to the said Web browser. It also has an API for passing the received request to the HTTP handler 230. In this collaboration Web server 210, an application 211 is installed. This application 211 indicates checking of authority to access this collaboration Web server 210, generation of a UAI (see below), allocation of an agent and the like. A UAI generator 213 responds to an indication of the application 211 for allocating a UAI that is uniquely identifiable by the Web browser on the customer's side. An agent assignment 215 uses an agent management table 220 to manage status of the information terminal on the agent's side, and to manage information of the Web browser on the customer's side that participates in a collaboration.

The HTTP handler 230 accepts an HTTP request received by the collaboration Web server 210 to determine whether a local process or an acquisition process of a Web server (the acquisition process requires to delegate its processing to the cache manager 270) is to be carried out. If it is determined that processing of the request is delegated to the cache manager 270, the request is passed to the HTTP request dispatcher 240. Otherwise, the request is returned to the collaboration Web server 210. Also, the HTTP handler 230 sends an HTML content, which is returned via the cache manager 270, back to the Web browsers 110, 120 by way of the Web server 210.

The HTTP request dispatcher 240 responds to the HTTP request from the Web browser 110 for determining whether or not its corresponding HTML content resides in a cache 275 within the cache manager 270. If not, the HTTP request dispatcher 240 sends the HTTP request to the actual Web servers 151, 153, 155 and receives the HTML content therefrom. The received HTML content is stored into the cache 275 under the control of cache manager 270 and, at the same time, the HTML content is returned to the HTTP handler 230 by way of the cache manager 270. On the other hand, if the HTML content resides in the cache 275 within the cache manager 270, the HTTP request dispatcher 240 indicates to send its corresponding data back to the Web browsers 110, 120.

The multidomain manager 250 manages relations between virtual Web servers that are owned by the collaboration Web server 210 and the actual Web servers 151, 153, 155. Also, the multidomain manager 250 manages methods for establishing HTTP sessions with respect to the actual Web servers 151, 153, 155.

The cache manager 270 is used for caching an HTML content (HTTP response), which corresponds to an HTTP request sent from a Web browser 110, 120. Also, in a situation where the two Web browsers are being shared, the cache manager 270 responds to HTTP requests sent by both of the Web browsers for controlling to send the same HTML content back to them. The session manager 290 establishes sessions on the agent's side and the customer's side, and allocates session IDs.

(It will be appreciated that the functional blocks shown in Fig. 3 are logical functional blocks as implemented by combined hardware and software, rather than individual hardware components).

### D. Setting/Registration Procedure of System

### D-1. Setting of Domain Name Server

For each of the Web servers 151 to 155 that are serviced by the collaboration server 100, a different host name will be defined respectively. Note, however, that an IP address of the collaboration server 100 is to be set up/registered as the respective IP address. For example, as shown in Fig. 3, assuming that the actual Web servers (their host names are: www. a. com (151); www. b. com (153); www. c. com (155); www. d. com (157)) are to be serviced by the collaboration server 100 (its host name is: www. isp. com; and its IP address is: 9. 100. 100. 100), the same IP address (9. 100. 100. 100) as that of the host name (www. isp. com) will be commonly set up with respect to host names (wwwc. a. isp. com; wwwc. b. isp. com; wwwc. c. isp. com; wwwc. d. isp. com) respectively.

### D-2. Setting of Web Server

For each of said host names (wwwc. a. isp. com; wwwc. b. isp. com; wwwc. c. isp. com; wwwc. d. isp. com), a virtual Web server will be created respectively. While, viewing from the Web browsers, they appear to be independent Web servers respectively, they are actually a single Web server.

The information terminal 120 on the agent's side uses its Web browser to send a request for a specific URL to the Web server (wwwc. a. isp. com) on the collaboration server 100, thereby activating an application A to perform the following functions. Thus a unique UAI generated by the UAI generator 213 is set into an HTTP response header as a Cookie. Also, by notifying the agent assignment 215 of its own UAI, it is registered at the agent management table 220 and enters into a customer wait state.

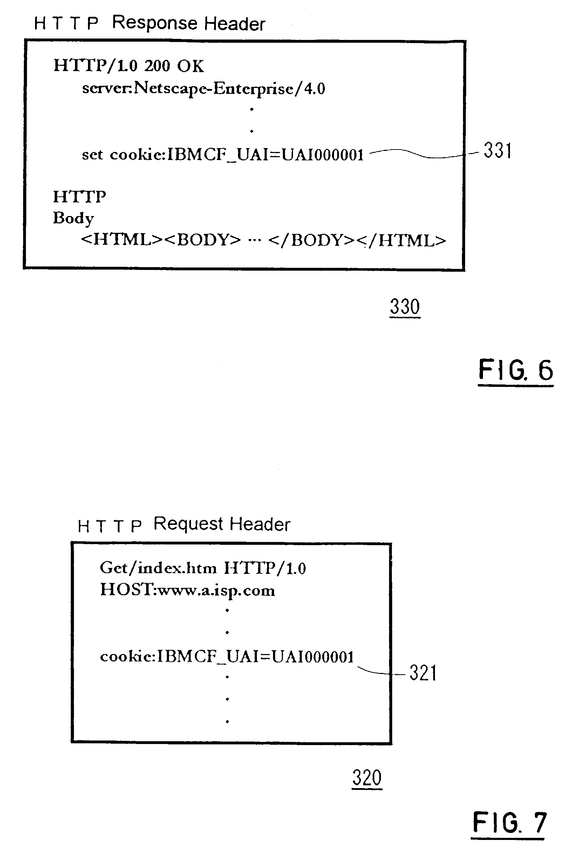

Fig. 6 shows an example of an HTTP response header 330 to be sent by the application A at this point of time. As shown, the HTTP response header 330 contains a "set-cookie" command 331 for registering the UAI at the Web browser on the customer's side. Thereafter, as shown in Fig. 7, an HTTP request header 320 will contain a "Cookie" command 321 for acquiring UAI information that enables one to uniquely identify the Web browser on the customer's side.

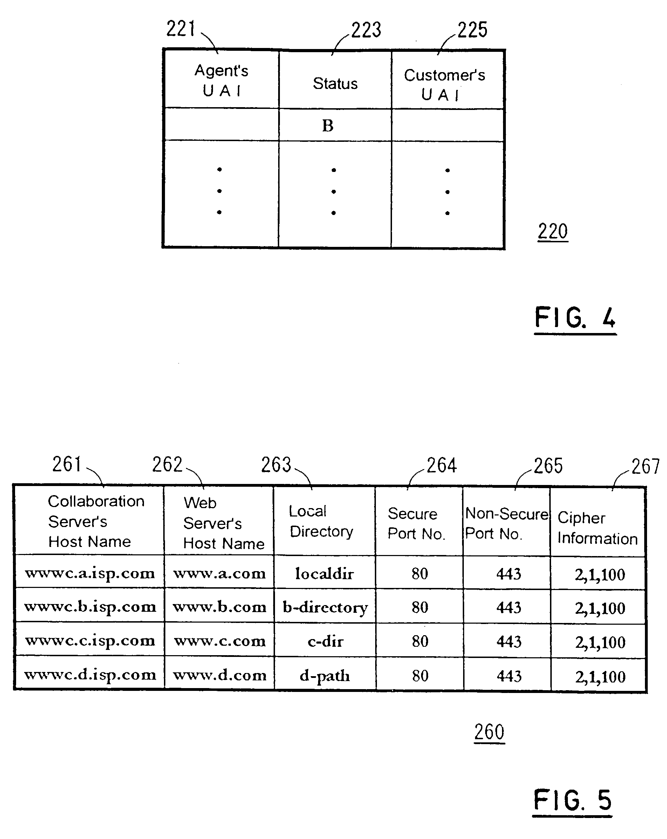

The application 211 on the Web server 210 is specified at a local directory 263 within a destination Web servers' management table 260 (Fig. 5). When this application 211 responds to an HTTP request without a Cookie called "IBMCF UAI" for creating an HTTP response, it generates a unique ID (UAI), uses the "Set-cookie:" response header to set the previously generated UAI into the key called "IBMCF UAI" as a Cookie, and sends the HTTP response back to the Web browser.

Thereafter, an HTTP request to be sent from this Web browser to the Web server (wwwc. a. isp. com) will contain this UAI or ID at HTTP Cookies in its HTTP request header. With this ID, the collaboration server 100 will be able to identify each Web browser on the Internet.

Fig. 4 is a conceptual diagram of the agent management table 220 in a preferred embodiment. As shown, in a first column 221, UAIs of those agents logged-on the system are registered. In a second column 223, status (B: busy; F: free; and the like) of such agents are registered, whilst in a third column 225, UAIs of their accompanying collaborators (Web browsers on the customer's side) are registered.

### D-3. Setting of Collaboration Server

In the destination Web servers' management table 260, the following items are set up.
1. Associations between the virtual Web servers and the actual Web servers 151 to 157;
2. Settings of the local directory 263 entries corresponding to the virtual Web servers; and
3. Settings of methods for establishing HTTP sessions with respect to the actual Web servers 151 to 157(non-secure and secure port numbers, as well as cipher information)

Fig. 5 is a conceptual diagram of the destination Web servers' management table 260 in a preferred embodiment. As shown, the destination Web servers' management table 260 manages a variety of information in its columns, which are labeled as collaboration server's host name 261, Web server's host name 262, local directory 263, non-secure port number 264, secure port number 265 and cipher information 267 respectively.

A collaboration server's host name 261 entry and a Web server's host name 262 entry contain such information for specifying a virtual Web server and an actual Web server respectively. A local directory 263 entry contains such information for accessing information of a virtual Web server. Controlling this local directory 263 by means of the destination Web servers' management table 260, it becomes possible to provide an application for offering common service to a plurality of Web servers, without changing the Web servers' side. In a preferred embodiment, it is possible to execute such an application, which is unique to a collaboration (allocation of a UAI, log-in control of an agent and the like), and which is specified at a local directory 263 entry within this destination Web servers' management table 260. In a preferred embodiment, by requesting a specific URL (e.g., http://wwwc. a. isp. com/servlet/appl/), it is possible to activate the specified application.

A non-secure port number 264 entry and a secure port number 265 entry contain information for specifying those port numbers for use in non-secure and secure communications respectively. A cipher information 267 entry contains information for specifying a communication procedure to be carried out by using a secure port number.

### E. Operational Procedures

By using the Web browser of the information terminal 110 on the customer's side to send a request for another URL (e.g., http://wwwc. a. isp. com/servlet/applB/), which is different from the aforesaid specific URL requested by an agent, to the Web server (wwwc. a. isp. com) on the collaboration server 100, an application B will be activated. Similar to the aforesaid operation of the agent's side, this application B will set a unique UAI generated by the UAI generator 213 into an HTTP response header as a Cookie.

Fig. 6 is a conceptual diagram showing an example of an HTTP response header 330 in a preferred embodiment. As shown, the HTTP response header 330 contains a "set cookie" command 331 for registering a UAI at the Web browser on the customer's side. Thereafter, as shown in Fig. 7, an HTTP request header 320 will contain a "Cookie" command 321 for acquiring UAI information that enables one to uniquely identify the Web browser on the customer's side.

More particularly, when the application 211 on the Web server 210 responds to an HTTP request without a Cookie called "IBMCF UAI" for creating an HTTP response, it generates a unique ID (UAI), uses a "Set-cookie:" response header to set the previously generated UAI into the key called "IBMCF UAI" as a Cookie, and sends it back to the Web browser.

Thereafter, an HTTP request sent from this Web browser to the Web server (wwwc. a. isp. com) will contain this UAI or ID at HTTP Cookies in its HTTP request header. With this ID, the collaboration server 100 will be able to identify each Web browser on the Internet. If an agent is requested, an application C for requesting such an agent will be activated by the Web server on the collaboration server 100. The application C sends a request for assignment of an agent to the agent assignment 215.

The agent assignment 215 retrieves the agent management table 220 to find an agent that is in a customer wait state, passes its UAI and the customer's UAI to the session manager 290, thereby requesting to generate a new session. Then, the session manager 290 uses the passed agent's UAI and customer's UAI to generate a session ID and thus informs the cache manager 270 that the Web browsers with the two UAIs are entering into a collaboration session using the generated session ID.

The cache manager 270 starts to share a cache 275 section associated with the agent's UAI and another cache 275 section associated with the customer's UAI. With this process, the agent is able to share the cache section owned by the customer.

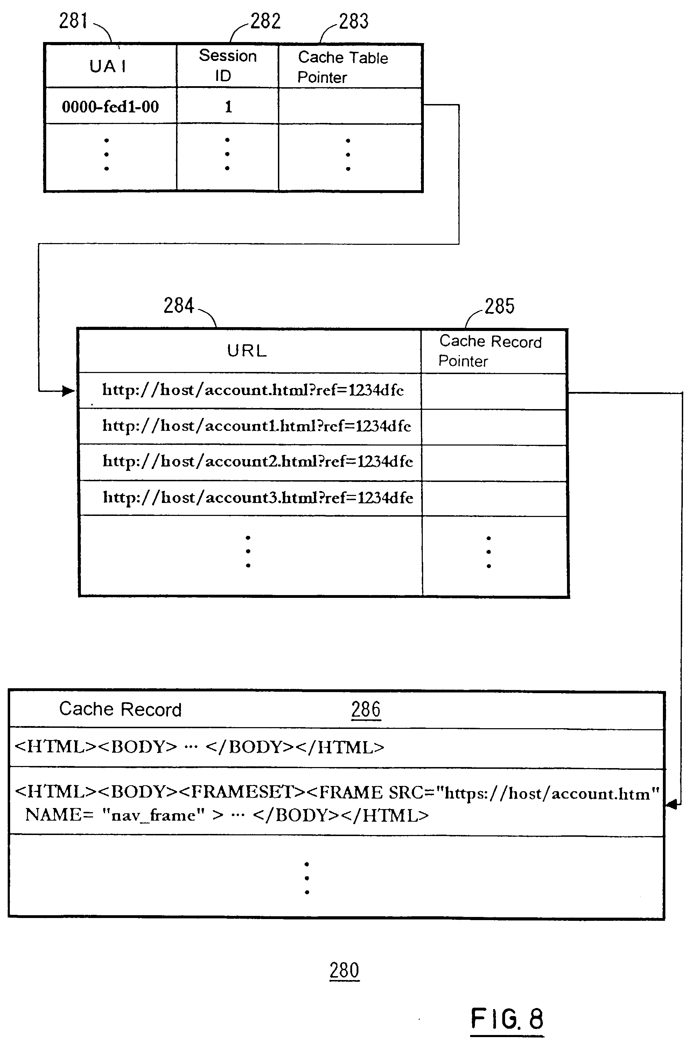

Fig. 8 is a conceptual diagram of a cache management table 280 in a preferred embodiment. As shown, the cache management table 280 manages a variety of information in its columns, which are labeled as UAI 281, session ID 282, cache table pointer 283, URL 284, cache record pointer 285 and cache record 286 respectively.

A UAI 281 entry contains a UAI of a Web browser on the customer's side. A session ID 282 entry contains information of a session ID that has been allocated by the session manager 290. A cache table pointer 283 entry manages pointer information for accessing a request group that has been sent in this session.

A URL 284 entry contains URL information that has been included in an HTML request. A cache record pointer 285 entry contains address information of stored HTML content. A cache record 286 entry contains information of the HTML content.

When a Web browser on the customer's side issues an HTTP request (GET HTTP://wwwc. a. isp. com/index.html) toward the Web server (wwwc. a. isp. com), the Web browser confirms an IP address (9. 100. 100. 100) of the destination Web server (wwwc. a. isp. com) through the domain name server 130. Then, the Web browser issues the HTTP request (GET HTTP://wwwc. a. isp. com/index.html) to the Web server (its IP address is: 9. 100. 100. 100) on the collaboration server 100.

The collaboration Web server 210 transfers the received HTTP request to the HTTP handler 230. This is done by an API of the Web server 210. At the HTTP handler 230, it is determined whether or not there exists a UAI in "HTTP Cookies" of the HTTP request header. If there is no such UAI, its processing is delegated to the collaboration Web server 210.

On the other hand, if there exists such a UAI, the HTTP handler 230 refers to a local directory 261 entry of the destination Web servers' management table 260, and determines whether its processing is delegated to the Web server 210 or the HTTP request is transferred to an actual Web server (www. a. com) 151. By way of example, if the present HTTP request is "GET HTTP://wwwc. a. isp. com/index.html", its processing will be delegated to the collaboration Web server 210.

In case of transferring the HTTP request to the actual Web server (www. a. com) 151, the HTTP handler 230 checks at the outset whether or not there exists a corresponding HTML file in the cache 275 within the collaboration server 100. If so, its content will be sent back to the Web server. In a preferred embodiment, this determination is made based on whether or not there exists a URL object. On the other hand, if there is no such corresponding HTML file, the HTTP handler 230 refers to the destination Web servers' management table 260 and, sends the HTTP request to the actual Web server (www. a. com) 151. Thereafter, it stores an HTTP response received from the actual Web server (www. a. com) 151 into the cache 275 and, at the same time, it sends the HTTP response back to the Web server 210.

The collaboration Web server 210 sends the HTTP response so received back to the Web browser as it is. Carrying out said processing for each of the Web servers that are defined by the destination Web servers' management table 260, it becomes possible to support a plurality of domains.

It will be appreciated that although the invention has been described above with respect to using Web browsers over the Internet, it is also applicable to collaboration servers on communication systems that use a protocol other than the Internet protocol.

## Claims

1. An information processing server for supporting a collaboration session between a customer browser and an agent browser, comprising:
(a) means for determining whether or not unique identifier information is contained in a first HTTP request from a browser and, if not, for generating such unique identifier information to be granted to said browser;
(b) means for generating an HTTP response containing said unique identifier information and for sending said HTTP response to said browser; and
(c) a destination Web server management system for transferring a second HTTP request to another Web server corresponding to a host name contained in said second HTTP request sent from said browser.

2. The server of claim 1, further comprising an agent management table for managing the unique identifier information for a customer browser and the unique identifier information for an agent browser having a collaboration relation with said customer browser.

3. The server of claim 1 or 2, further comprising means for determining whether or not said second HTTP request contains information specifying an application, wherein if the request does contain such information the relevant application is executed, and if not, the request is passed to the destination Web server management system.

4. The server of any preceding claim, wherein the destination Web server management system further comprises means for determining the communication method to be used in transferring said request to said another Web server.

5. A method for supporting at a server a collaboration session between a customer browser and an agent browser, comprising:
(a) determining whether or not unique identifier information is contained in a first HTTP request to the server from a browser and, if not, for generating such unique identifier information to be granted to said browser;
(b) means for generating an HTTP response containing said unique identifier information and for sending said HTTP response from the server to said browser; and
(c) transferring a second HTTP request to another Web server corresponding to a host name contained in said second HTTP request sent from said browser.

6. The method of claim 5, further comprising the step of maintaining an agent management table at the server for managing the unique identifier information for a customer browser and the unique identifier information for an agent browser having a collaboration relation with said customer browser.

7. The method server of claim 5 or 6, further comprising the steps of:
determining whether or not said second HTTP request contains information specifying an application; and
responsive to the request containing such information, executing the specified application; otherwise, passing the request for transfer to another Web server.

8. The method of any of claims 5 to 7, further comprising the step of determining the communication method to be used in transferring said request to said another Web server.

9. Computer program code which when executed performs the method steps of any of claims 5 to 8.

10. A computer storage medium containing the computer program code of claim 9.
